# EUROPEAN PATENT APPLICATION

(11) **EP 4 685 295 A1**
(43) Date of publication of application: **28.01.2026**
(21) Application number: 24190037.2
(22) Date of filing: 22.07.2024
(51) Int. Cl.: E02F 9/26, G01C 21/16

(54) **TILT MEASUREMENT SYSTEM AND METHOD FOR OPERATING A WORKING MACHINE**

(71) Applicant: Pepperl+Fuchs SE, 68307 Mannheim (DE)
(72) Inventor: Speck, Achim, 68307 Mannheim (DE)
(74) Representative: Banse & Steglich Patentanwälte PartmbB

(57) **Abstract**

The present invention relates to a measurement system (14), particularly a tilt measurement system or an angular velocity measurement system, for outputting output sensor data wherein the output sensor data indicate, with respect to a gravitational force vector, an inclination (tilting angle) or respectively an angular velocity of the device, particularly a working machine (1), which it is fixedly attached to, comprising:
- a sensor unit (22), particularly an inertia measurement unit or a gyroscope, including one or more sensor elements for detecting force and/or angular velocity and being configured to continuously provide raw sensor data samples for each of the sensor elements.
- a filter parameter selection unit (24) configured to select one or multiple filter parameters sets each including one or more filter parameters for the filtering, wherein the filter parameters sets are selected by at least one predetermined rule applied on the raw sensor data samples,
- a filter unit (23) configured to filter data to provide the output sensor data depending on the selected one of a plurality of filter parameter sets, wherein the data depends on or corresponds to the raw sensor data samples obtained by the sensor elements;
characterized by
a geopositioning system (25) configured to provide a geographical position of the measurement system (14),
wherein the filter parameter selection unit (24) is further configured to select the one or multiple filter parameter sets depending on the geographical position of the measurement system.

## Description

### Technical field

The present invention relates to tilt and angular velocity measurement systems for measuring the tilting or respectively the angular velocity of a device, particularly for measuring the tilting or angular velocity of a working machine, i.e. in construction sites, rough environments, or the like. The present invention further relates to a filter parameter selection for processing raw sensor signals.

### Technical background

Tilt and angular velocity measurement sensor units are commonly used in various applications and may be based on a broad variety of different technologies and physical effects. Commonly, inertia measurement units (IMU) may be used to determine the tilting of a device, indicated as a tilting angle with respect to a reference coordinate system, provided that the inertia measurement unit is physically fixedly attached to the device. Similarly, angular velocity measurement units such as gyroscopes are applied in various applications to determine the angular velocity of a device, indicated as a angular velocity with respect to the reference coordinate system. Particularly, IMUs and gyroscopes are commonly used in guidance systems utilized in vehicles, providing an independent and alternative source for navigation.

IMUs generally allow measuring an acceleration force in all spatial directions. Due to gravitation, such IMUs always provide a constant output vector which may offset all other measured acceleration forces. The direction of the gravitation-induced constant output vector may be regarded as an indicator of the tilting angle of the device.

A standard IMU may be implemented with one or more sensor units which may be integrally implemented as MEMS-based units. The sensor units do usually include spring-supported movable masses which are capacitively coupled to provide a variable capacitance output depending on gravity and motion-induced force, such as an inertial force or centripetal force, being exerted thereon. The variable capacitance is conventionally measured to provide an electrical sensor signal in the form of e.g. a voltage signal or the like.

Usually, the electrical sensor signals provided by the sensor unit are raw sensor signals. As the sensing of the sensor unit is sensitive over a wide range of physical conditions, such as temperature, ambient pressure, mechanical stress, magnetic/electromagnetic fields, cross-talking or the like, the raw sensor signals have to be preprocessed to obtain clean output sensor data, which can be used for downstream applications. Therefore, in close proximity, a preprocessing unit is coupled with the sensor unit to allow calibration, re-calibration, and/or filtering of the raw sensor signals. Preprocessing may conventionally include a compensation of the raw sensor signals, which allows for correcting misalignment of the sensing unit, and for applying a scaling factor and an offset for correcting a sensing mismatch. Such compensation may be defined by a compensation table to store the relevant compensation parameters.

Furthermore, preprocessing may include filtering of the raw sensor signals, particularly to reduce or eliminate dynamic influences, such as from high-frequency vibrations or the like. Filters may be parametrized by filter parameters. Usually, the filter parameters are determined by calibration, however, due to the high sensitivity of the measurement of sensor signals on ambient physical conditions, accurate sensor signals cannot be obtained which are optimized for all operating situations.

Also, the measurement system including such sensor units may be exposed to different dynamic conditions which may require an online adaptation of filter parameters to provide output sensor data that are appropriate to be used as is in the downstream application.

For tilt or angular velocity measurement systems in working machines, it is essential to provide reliable tilting angle output or respectively a reliable angular velocity output even with quickly changing environmental conditions. For instance, if a working machine travels along a non-paved or non-prepared ground, the ground condition essentially may affect the measurement accuracy of such a measurement system.

Although the filter parameters can be selected according to the operation conditions of such a working machine, the filter parameters are always selected following a change of the conditions that may cause unreliable tilt output values until the filter parameters are adapted to the changed condition. In other words, there is a delay between the time of changed conditions and the time new filter parameters come into effect.

It is therefore an object of the present invention to provide an improved measurement system which allows a better or quicker adaptation to dynamic conditions of a working machine the measurement system is operated in.

### Summary of the invention

This object has been achieved by the measurement system with improved adaptive filtering according to claim 1 and by the method for operating a tilt measurement system and a working machine according to the further independent claims.

Further embodiments are indicated in the depending subclaims.

According to a first aspect, a measurement system, particularly a tilt measurement system or an angular velocity measurement system, for outputting output sensor data according to a gravitational force wherein the output sensor data indicate an inclination or respectively an angular velocity of the device, particularly a working machine, which it is fixedly attached to, comprising:
- a sensor unit, particularly an inertia measurement unit or a gyroscope, including one or more sensor elements for detecting force and/or angular velocity and being configured to continuously provide raw sensor data samples for each of the sensor elements.
- a filter unit configured to
   - filter data to provide the output sensor data depending on a selected one of a plurality of filter parameter sets each including one or more filter parameters for the filtering, wherein the data depends on or corresponds to the raw sensor data samples obtained by the sensor elements;
   - a filter parameter selection unit configured to select one or multiple filter parameters sets each including one or more filter parameters for the filtering, wherein the filter parameters sets are selected by at least one predetermined rule applied on the raw sensor data samples;
wherein the one or multiple filter parameter sets are selected depending on a geographical position of the measurement system.

According to a further aspect, a working machine is provided which comprises the measurement system and a geopositioning system which is configured to provide the geographical position of the working machine or the measurement system. The geopositioning system may be a classical satellite-based positioning system such as NAVSTAR, GPS, GNSS or the like). Alternatively, the geopositioning system may include a communication unit which receives the geographical position from an external device such as a camera based system which locates the working machine/measurement system in a field or an area, such as a construction site or the like, and communicates the geographical position to the working machine or the measurement system.

Measurement systems are commonly applied in working machines to provide tiling angle or inclination or angular velocity and to control or to be considered in various functions as already known in the art, such as angle information and control of excavator arms, feedback of vehicle orientation (i.e. Chassis ... ), tilt measurement of dozer blades relative to the chassis, angle information and control of wood harvester arms and driver cabins, tilt information for dump truck backs, and so on.

As mentioned above, the raw sensor signals of the sensor elements may be filtered by one or more filter units, particularly to reduce or eliminate dynamic influences, such as from high-frequency vibrations or the like. Filter units may be parametrized by filter parameters, which are usually determined by calibration. However, due to the high sensitivity of the measurement of sensor signals on ambient physical conditions, accurate sensor signals cannot be obtained under all operating situations with the same parameters. The filter parameters are therefore provided as different filter parameter sets to be selected according to the operating conditions.

Due to the working machine traveling over ground or in a specific environment which may have a quickly changing unevenness, working machines operate in conditions where sudden mechanical impacts can occur which affect the operation of the working machine and essentially of the measurement system. To adapt the measurement system to various environmental/ground conditions, a filter parameter determination unit may be provided which allows selecting one of a plurality of filter parameter sets according to the state of operation of the tilt measurement unit or the working machine.

However, for setting the filter parameter sets associated with the operating condition firstly the changed operating condition has to be detected. As the detection of the actual operating condition may require an anylysis of signal charcteristics, it may result in a delay before the selection of the filter parameter set can be made. So the filter parameters sets are conventionally selected following the detection of a change of the operating condition of the measurement system and therefore cannot avoid that shortly before the transition between the operating conditions unreliable output sensor data values are output.

By the use of the actual geographical position in the measurement system as one of several criteria for the selection of the filter parameter sets, there is a quick indication about the environmental /ground condition in/on which the working machine is operated. This environmental/ground condition substantially may give an indication about the potential impacts and shocks the working machine might be exposed to which finally also affects the measurement made by IMUs or gyroscopes used in the measurement system.

The filter parameters may determine angle modes, cycle times, dead times, a selection parameter for a filter type or the like. The filter units which may be used may include a Kalman filter, a complementary filter, or any other kind of filters. The filter parameters may also include at least one of: a time constant, one or more elements of a state transition matrix of a Kalman filter, one or more elements of a control input matrix of a Kalman filter, one or more elements of a measurement matrix of a Kalman filter, a Kalman gain of a Kalman filter, zero location(s) of a compensation filter, pole location(s) of a compensation filter, a proportional gain of a compensation filter, an integral gain of a compensation filter, and a derivative gain of a compensation filter.

According to an embodiment, the geographical position may be used to retrieve environmental/ground condition data from a database which can be processed in the filter parameter selection unit. The environmental/ground condition data may include a global inclination of the area of the working machine is actually located and one or more properties about the environmental/ground condition indicating the roughness, unevenness, stoniness, softness, dryness and flexibility of the ground surface the working machine is traveling along. The database may be included in the filter parameter selection unit or can be remotely provided. The remotely provided database for providing ground conditions can provide more detailed and more updated data, for instance, if the environmental/ground condition is changed by weather conditions.

Uneven terrain could lead to high-frequency components in the raw sensor data depending on the speed of the working machine rolling over ground. To avoid having to drive extremely slowly to keep the oscillations low, a suitable low-pass filter could be selected for the data of interest.Therefore, the filter parameters may be selected depending on the speed as the speed effects the frequency impact on the sensor unit.

As the impact on the measurement may also depend on the tilt of the working machine the estimated inclination/tilt angle itself may be considered for the selection of the filter parameter sets.

Furthermore, the inertia of the measurement unit may be set depending on the actual geographical position or ground conditions derived thereof.

Furthermore, the travel speed of the working machine can be considered in this filter parameter selection unit so that the filter parameter set is selected also depending on the velocity of the working machine.

### Brief description of the drawings

Embodiments are described in more detail in conjunction with the accompanying drawings in which:
- Fig. 1: shows a working machine for operating on differing ground conditions;
- Fig. 2: shows a schematic view on the tilt measurement system to be applied in the working machine of Fig. 1; and
- Fig. 3: shows a flowchart illustrating the method for operating the tilt measurement system.

### Detailed description of embodiments

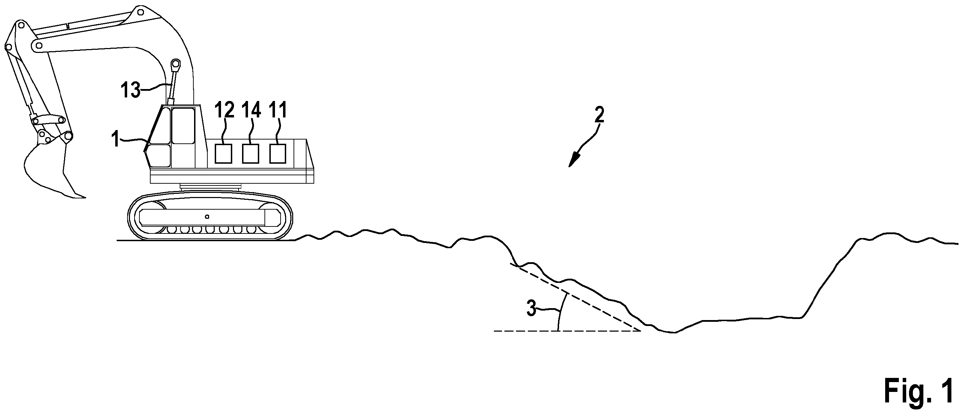

Fig. 1 exemplarily shows a working machine 1 for operating on a construction site 2. The construction site 2 usually has differing environmental/ground conditions along its extension which include a changing wide-range inclination/tilt angle 3 of the ground which may be defined as the average inclination of the area that may be covered by the working machine 1 and properties of the ground which reflects the roughness, unevenness, stoniness, softness, and flexibility of the ground surface due to stones, rocks, dry or wet soil, stony soil, rocky soil, or the like.

The working machine 1 includes a traction motor 11, a control unit 12, and multiple functional elements 13 which allow the working machine 1 to perform its task.

An inertial measurement system 14 is provided which is in communication with the control unit 12 so that functions implemented in the control unit 12 may be performed depending on a tilting angle or inclination of the working machine 1.

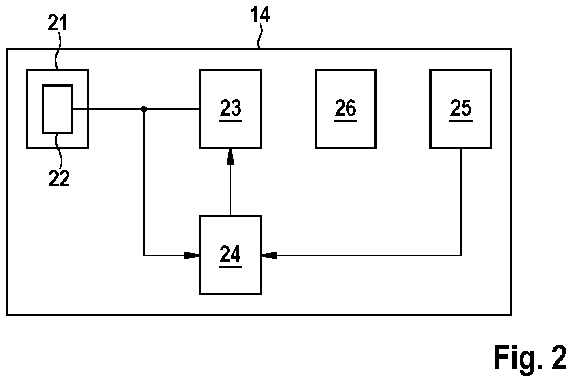

Fig. 2 shows schematically the elements of the tilt measurement system 14. The tilt measurement system 14 includes a tilt measurement unit 21 which may include an inertia measurement unit 22 to measure forces mainly due to acceleration with respect to three spatial directions and gravitation. The tilt measurement system 14 together with its inertia measurement unit 22 is fixedly attached to the working machine 1 so that due to a gravitational force, the output sensor data reflects the gravitational force vector as a permanent offset.

The inertia measurement unit 22 provides raw sensor data which includes indications of forces in three spatial directions and optional angle velocities around the three spatial axes. The raw sensor data is filtered in a filter unit to provide tilt output sensor data which is communicated or applied to the control unit as the indication of the tilting angle of the working machine.

The filter unit 23 uses filter parameters according to predefined filter parameter sets. The filter parameter sets may be selected by a filter parameter selection unit 24 which has implemented a model to evaluate the raw sensor data and other condition data to provide the filter parameters of the filter parameter set to the filter unit 23.

The tilt measurement system 14 has a geopositioning system 25 or is connected thereto and which is configured to locate the working machine 1 in its environment/world and to provide a corresponding geographical position. The geographical position may be provided by a geopositioning system 25 which may be satellite-based or ground-based which provides a geographical or wide-range position of the working machine 1 in the field.

The filter parameter selection unit 24 receives the geographical position of the tilt measurement system 14 and determines the filter parameter set depending on the geographical position. The filter parameter selection unit 24 can be made rule-based so that the geographical position may determine the filter parameter set according to a predefined region the working machine is located in.

According to another embodiment, the geographical position indicated as geoposition data may be used for retrieving environmental/ground condition data from a remote database. The environmental/ground condition data may include the ground inclination angle of the area in which the working machine 1 is actually located and a property about the environmental/ground condition indicating the roughness, unevenness, stoniness, softness, and flexibility of the ground surface the working machine 1 is traveling along.

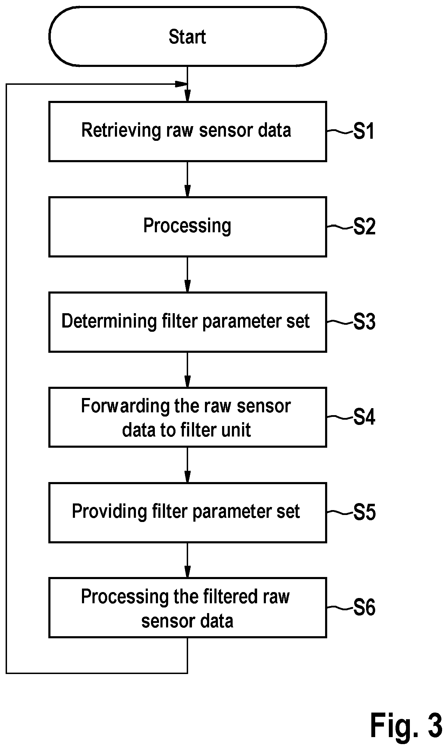

The tilt measurement system 14 performs a process which is illustrated by the flow chart of Figure 3. The process can be implemented by software and/or hardware.

In step S1 raw sensor data is retrieved from the inertia measurement unit 22.

In step S2 the raw sensor data may be preprocessed. For instance, an outlier detection and/or normalization can be performed.

In step S3 the current filter parameter set is determined by a rule-based or data-driven filter parameter model which selects the filter parameter set depending on the raw sensor data and geoposition data. The geoposition data can be used to retrieve from a database environmental/ground condition data by means of the communication device 26. The environmental/ground condition data may be processed to determine the suitable filter parameter set.

In step S4, the raw sensor data is forwarded to a filter unit 23.

In step S5 the selected filter parameter set is forwarded to the filter unit 23 to be applied therein.

In step S6 the filtered raw sensor data is processed to detect the gravitational portion in the measured forces and to derive an inclination of the working machine 1 based thereon.

## Claims

1. A measurement system (14), particularly a tilt measurement system or an angular velocity measurement system, for outputting output sensor data wherein the output sensor data indicate, with respect to a gravitational force vector, an inclination (tilting angle) or respectively an angular velocity of the device, particularly a working machine (1), which it is fixedly attached to, comprising:
- a sensor unit (22), particularly an inertia measurement unit or a gyroscope, including one or more sensor elements for detecting force and/or angular velocity and being configured to continuously provide raw sensor data samples for each of the sensor elements.
- a filter parameter selection unit (24) configured to select one or multiple filter parameters sets each including one or more filter parameters for filtering, wherein the filter parameters sets are selected by at least one predetermined rule applied on the raw sensor data samples,
- a filter unit (23) configured to filter data to provide the output sensor data depending on the selected one of a plurality of filter parameter sets,
wherein the data depends on or corresponds to the raw sensor data samples obtained by the sensor elements;
**characterized by**
a geopositioning system (25) configured to provide a geographical position of the measurement system (14) as geoposition data,
wherein the filter parameter selection unit (24) is further configured to select the one or multiple filter parameter sets depending on the geographical position of the measurement system (14) or the geoposition data.

2. The measurement system (14) according to claim 1, wherein a geopositioning system is configured to provide the geographical position.

3. The measurement system (14) according to claim 1 or 2, wherein a communication device (26) is provided to retrieve from an external database environmental/ground condition data depending on the geographical position.

4. The measurement system (14) according to any of the claims 1 to 3, wherein the environmental/ground condition data of the geographic position include one or more properties of the environmental/ground including at least one of roughness, unevenness, stoniness, softness, dryness, and flexibility.

5. The measurement system (14) according to any of the claims 1 to 4, wherein a velocity of the device can be considered in the filter parameter selection unit (25) so that the filter parameter set is selected also depending on the velocity of the device (1).

6. Method for operating a measurement system (14), particularly a tilt measurement system or an angular velocity measurement system, for outputting output sensor data wherein the output sensor data indicate, with respect to a gravitational force vector, an inclination (tilting angle) or respectively an angular velocity of the device, particularly of a working machine (1), which it is fixedly attached to, comprising the steps of:
- detecting force and/or angular velocity and continuously provide raw sensor data samples for each of the sensor elements;
- selecting one or multiple filter parameters sets each including one or more filter parameters for filtering, wherein the filter parameters sets are selected by at least one predetermined rule applied on the raw sensor data samples,
- filtering data to provide the output sensor data depending on the selected one of a plurality of filter parameter sets, wherein the filtered data depends on or corresponds to the raw sensor data samples obtained by the sensor elements;
**characterized by**
- providing a geographical position of the measurement system (14) as geoposition data, and
- selecting the one or multiple filter parameter sets depending on the geographical position of the measurement system (14) or the geoposition data.

7. A working machine (1) comprises the measurement system (14) according to any of the claims 1 to 5 and a geopositioning system (25) which is configured to provide the geographical position of the working machine (1) or the measurement system (14).

8. Method for operating a working machine (1) comprising:
- proving output sensor data by a measurement system (14) according to any of the claims 1 to 5;
- operating the working machine (1) depending on the output sensor data indicating an inclination of the ground the working machine (1) is travelling or moving.

## Amended claims

### Amended claims in accordance with Rule 137(2) EPC.

1. A tilt or angular velocity measurement system (14) for outputting output sensor data wherein the output sensor data indicate, with respect to a gravitational force vector, an inclination (tilting angle) or respectively an angular velocity of the device, particularly a working machine (1), which it is fixedly attached to, comprising:
- a sensor unit (22), which is an inertia measurement unit or a gyroscope, including one or more sensor elements for detecting force and/or angular velocity and being configured to continuously provide raw sensor data samples for each of the sensor elements;
- a filter parameter selection unit (24) configured to select one or multiple filter parameters sets each including one or more filter parameters for filtering, wherein the filter parameters sets are selected by at least one predetermined rule applied on the raw sensor data samples,
- a filter unit (23) configured to filter data to provide the output sensor data depending on the selected one of a plurality of filter parameter sets, wherein the data depends on or corresponds to the raw sensor data samples obtained by the sensor elements;
**characterized by**
a geopositioning system (25) configured to provide a geographical position of the measurement system (14) as geoposition data,
wherein the filter parameter selection unit (24) is further configured to select the one or multiple filter parameter sets depending on the geographical position of the measurement system (14) or the geoposition data.

2. The measurement system (14) according to claim 1, wherein a geopositioning system is configured to provide the geographical position.

3. The measurement system (14) according to claim 1 or 2, wherein a communication device (26) is provided to retrieve from an external database environmental/ground condition data depending on the geographical position.

4. The measurement system (14) according to any of the claims 1 to 3, wherein the environmental/ground condition data of the geographic position include one or more properties of the environmental/ground including at least one of roughness, unevenness, stoniness, softness, dryness, and flexibility.

5. The measurement system (14) according to any of the claims 1 to 4, wherein a velocity of the device can be considered in the filter parameter selection unit (25) so that the filter parameter set is selected also depending on the velocity of the device (1).

6. Method for operating a tilt measurement system or an angular velocity measurement system, for outputting output sensor data wherein the output sensor data indicate, with respect to a gravitational force vector, an inclination (tilting angle) or respectively an angular velocity of the device, particularly of a working machine (1), which it is fixedly attached to, comprising the steps of:
- detecting force and/or angular velocity and continuously provide raw sensor data samples for each of the sensor elements;
- selecting one or multiple filter parameters sets each including one or more filter parameters for filtering, wherein the filter parameters sets are selected by at least one predetermined rule applied on the raw sensor data samples,
- filtering data to provide the output sensor data depending on the selected one of a plurality of filter parameter sets, wherein the filtered data depends on or corresponds to the raw sensor data samples obtained by the sensor elements;
**characterized by**
- providing a geographical position of the measurement system (14) as geoposition data, and
- selecting the one or multiple filter parameter sets depending on the geographical position of the measurement system (14) or the geoposition data.

7. A working machine (1) comprises the measurement system (14) according to any of the claims 1 to 5 and a geopositioning system (25) which is configured to provide the geographical position of the working machine (1) or the measurement system (14).

8. Method for operating a working machine (1) comprising:
- proving output sensor data by a measurement system (14) according to any of the claims 1 to 5;
- operating the working machine (1) depending on the output sensor data indicating an inclination of the ground the working machine (1) is travelling or moving.
